# EUROPÄISCHE PATENTSCHRIFT

(11) **EP 1 970 643 B1**
(45) Veröffentlichungstag und Bekanntmachung des Hinweises auf die Patenterteilung: **31.03.2010**
(21) Anmeldenummer: 08003171.9
(22) Anmeldetag: 21.02.2008
(51) Int. Cl.: F24J 2/54

(54) **Vorrichtung und Verfahren zur Nachführung mindestens eines Moduls einer Solarmodulanlage**
Device and method for tracing at least one module in a solar module array
Dispositif et procédé destinés au suivi d'au moins un module d'une installation de module solaire

(30) Priorität: 13.03.2007 DE 102007012543
(43) Veröffentlichungstag der Anmeldung: 17.09.2008
(73) Patentinhaber: Reisdorf, Wolfgang, 4730 Hauset (BE)
(72) Erfinder: Reisdorf, Wolfgang, 4730 Hauset (BE)
(74) Vertreter: Bauer, Dirk

(56) Entgegenhaltungen:
- WO-A-2006/046843
- DE-A1-102006 022 982
- DE-U1- 9 116 151
- DE-U1- 20 204 679

## Beschreibung

Die Erfindung betrifft eine Vorrichtung zur Nachführung mindestens eines Moduls einer Solarmodulanlage, umfassend eine das Modul tragende und um eine Achse drehbar gelagerte Trageinrichtung, ein die Trageinrichtung haltendes, ortsfest zu installierendes Gestell sowie Mittel zur Nachführung der Trageinrichtung zusammen mit dem Modul, wobei die Achse parallel zu einer durch das Modul definierten Ebene und in einer durch den Aufstellungsort definierten Meridianebene unter einem Winkel zwischen 10° und 70° zur Horizontalen des Aufstellungsortes verläuft und das Modul sowie die Trageinrichtung ungefähr quadratisch ausgebildet sind. Ferner betrifft die Erfindung ein Verfahren zur Nachführung mindestens eines Moduls einer Solarmodulanlage und eine Anordnung von Solarmodulen.

Im Sinne der vorliegenden Anmeldung ist der Begriff "ungefähr quadratisch" so zu verstehen, dass das Seitenverhältnis der Trageinrichtung beziehungsweise des Moduls in einem Bereich zwischen 0,9 und 1,1 liegt. Dabei muss die Geometrie von Trageinrichtung und Modul nicht unbedingt übereinstimmen. Vielmehr ist es denkbar, dass die Trageinrichtung beispielsweise genau quadratisch ausgebildet ist, also ein Seitenverhältnis von 1,0 aufweist, und das darauf befestigte Modul, das aus mehreren Modulelementen zusammengesetzt sein kann, ein Seitenverhältnis von 1,1 hat.

Solarmodulanlagen können einerseits Vorrichtungen zur Wärmegewinnung aus der Sonneneinstrahlung sein, wobei die im Sonnenlicht enthaltene Wärmeenergie im Modul gesammelt und von dort weitergeleitet wird. Im Gegensatz dazu, erfolgt durch photovoltaische (PV-) Anlagen eine Umwandlung der Strahlungsenergie der Sonne in elektrische Energie. In der vorliegenden Anmeldung ist es nicht erheblich, welche Art der Energiegewinnung durch die Solaranlagen erfolgen soll, weshalb im Folgenden "Modul" als Oberbegriff für die in den Solaranlagen genutzten Einrichtungen, das heißt thermische Solarkollektoren und sogenannte PV-Module, verwendet wird.

Um im Betrieb ein Maximum an Energie zu erzeugen, muss die Sonne im rechten Winkel auf die Moduloberfläche einstrahlen. Weicht die Sonneneinstrahlung von dem rechten Winkel ab, so verringert sich die Leistung der Solaranlage.

Aufgrund der zyklischen Bewegung der Sonne um die Erde - sowohl in tageszeitlichem als auch in jahreszeitlichem Wechsel - ist der Einfallswinkel der Strahlung jedoch nicht konstant, so dass bei Anlagen mit fest installierten Modulen ein Kompromiss bezüglich des Neigungswinkels gefunden werden muss. Die Ausrichtung ist dann so zu wählen, dass die Sonneneinstrahlung am intensivsten ist.

Demnach ist der Wirkungsgrad von Solaranlagen zum Einen abhängig von dem Neigungswinkel zwischen der Horizontalen und dem Modul und zum Anderen von der Ausrichtung des Moduls in die Himmelsrichtung.

Der optimale Neigungswinkel des Moduls gegenüber der Horizontalen hängt ferner von der geographischen Breite des Ortes ab, an dem die Anlage genutzt werden soll. Beispielsweise bringt eine in Deutschland befindliche Solaranlage bei einer Ausrichtung nach Süden und bei einem Neigungswinkel zwischen 30° und 40° im Sommer die höchsten Energieerträge. Soll die Solaranlage jedoch bezüglich Frühjahr und Herbst optimiert werden, ist ein Neigungswinkel zwischen 50° und 60° günstiger.

### Stand der Technik

Neben Solaranlagen mit fest installierten Modulen gibt es im Stand der Technik auch Solaranlagen, bei denen die Module dem Sonnenstand nachgeführt werden. Dabei unterscheidet man Anlagen, deren Module einachsig, entweder dem Stundengang (Nachführung um eine vertikale Achse) oder dem Einfallswinkel der Sonne (Nachführung um eine horizontale Achse) oder zweiachsig nachgeführt werden, wodurch ein Energiegewinn von bis zu 50 % gegenüber einer feststehenden Anordnung erreicht werden kann.

Aus der DE 199 22 795 A1 ist ein Beispiel für eine Vorrichtung zur Einstellung des Anstellwinkels bekannt, wobei das Modul um eine horizontale Achse drehbar gelagert ist. Das Modul wird auf zwei horizontal verlaufenden Trägern befestigt, die wiederum an ihren Enden mit Schlitten versehen sind, die in einem bogenförmigen Gestell bewegt werden können. Somit ist der Neigungswinkel zwischen der Horizontalen und dem Kollektor verstellbar ausgebildet.

Als Beispiel für eine Vorrichtung zur zweiachsigen Nachführung von Solarmodulen sei die DE 103 43 374 A1 genannt. Hier wird ein Gestell mit einer rahmenartigen Konsole zur Befestigung der Solarkollektoren offenbart, wobei das Gestell auf einem Drehkranz drehbeweglich angeordnet ist. Ferner ist die Konsole um eine horizontale Achse drehbeweglich mit dem Gestell verbunden, so dass neben einer Drehbewegung der Kollektoren um eine vertikale Achse ebenfalls eine Drehbewegung um eine horizontale Achse ausgeführt werden kann.

Aus der DE 202 04 679 U1 ist ein Beispiel für eine Vorrichtung zur Nachführung eines Solarmoduls mittels zwei Positionierstangen bekannt, wobei Modul und Tragrahmen allseitig schwenkbar auf einem Tragmast gelagert sind.

Die aus der EP 1 710 651 A1 bekannte Nachführeinrichtung für eine Photovoltaikanlage ist ebenfalls derart aufgebaut, dass eine Nachführung des Moduls durch Drehung sowohl um eine vertikale Achse als auch um eine horizontale Achse möglich ist. Um auf jeweils einen separaten Antrieb für die Nachführung in der horizontalen Achse und in der vertikalen Achse verzichten zu können, wird in der EP 1 710 651 A1 eine mechanische Kopplung der vertikalen und horizontalen Nachführung derart vorgesehen, dass die Nachführung in horizontaler Achse über eine Stellbewegung des Antriebs für die vertikale Achse bewirkbar ist.

Allen vorgenannten Nachführeinrichtungen ist ein komplexer und aufwendiger Aufbau gemein, der die Vorrichtungen nicht zuletzt wartungsintensiv und teuer macht. Nachgeführte Solaranlagen sind aufgrund ihrer freien Aufstellung einer besonderen Windbelastung ausgesetzt, so dass hohe Anforderungen an Stabilität gefordert sind. Verursacht die Nachführeinrichtung unverhältnismäßig hohe Zusatzkosten, ist es sinnvoller auf eine Nachführung zu verzichten und stattdessen ein feststehendes Modul größerer Oberfläche aufzustellen.

Schließlich geht aus der DE 20 2004 001 642 U1 ein Gestell zur Aufstellung von Solaranlagen hervor, mittels dessen ein Solarmodul um eine Achse verschwenkt wird, die in der Ebene des Solarmoduls liegt, so dass eine einachsige Nachführung möglich ist. Dabei liegt die Achse im Bereich einer Seitenhalbierenden des quadratisch aufgebauten Solarmoduls.

### Aufgabe

Aufgabe der vorliegenden Erfindung ist es, aus dem Stand der Technik bekannte Nachführeinrichtungen für Solarmodule derart zu entwickeln, dass deren apparativer Aufwand möglichst gering gehalten und somit eine wirtschaftlicher Einsatz möglich wird. Ferner soll ein störungsfreier Dauerbetrieb ohne wartungsbedingte Ausfallzeiten möglich sein. Weiterhin sollen ein Verfahren zur Nachführung von Solarmodulen und eine Anordnung derselben bereitgestellt werden, die ebenfalls die vorgenannten Aufgaben erfüllen.

### Lösung

Ausgehend von einer Vorrichtung zur Nachführung mindestens eines Moduls einer Solaranlage gemäß der eingangs beschriebenen Art wird die Aufgabe dadurch gelöst, dass die Befestigung der Trageinrichtung in dem Gestell genau an zwei Punkten erfolgt, so dass die Drehbewegung um genau die durch diese Punkte definierte Achse möglich ist, die parallel zu einer Diagonalen des durch das Modul bzw. die Trageinrichtung gebildeten Quadrats verläuft oder mit dieser zusammenfällt.

Bei der Nachführung der Vorrichtung um die gegenüber der Horizontalen geneigte Achse erfährt die Trageinrichtung und damit auch das Modul eine Drehung sowohl um die Vertikale als auch um die Horizontale, so dass hier eine Kopplung der vertikalen und horizontalen Nachführung vorliegt. Die Vorrichtung wird also so aufgestellt, dass die Achse der Trageinrichtung in einer in Nord-Süd-Richtung verlaufenden vertikalen Ebene liegt. Der Winkel α entspricht dann dem minimalen Anstellwinkel (Mittags wirksam). Bei Ausrichtung nach Osten oder Westen steigt der Anstellwinkel kontinuierlich an (Koppelung).

Dabei ist es als besonders positiv zu bewerten, dass die Drehung lediglich um eine Achse erfolgt und somit nur ein Antrieb zur Nachführung des Moduls erforderlich ist. Die Lagerung der nur einen Drehachse der Trageinrichtung kann sehr einfach und stabil ausgeführt werden, wobei die Konstruktion der Trageinrichtung und des Gestells mit einfachen technischen Mitteln hergestellt werden kann. Die erfindungsgemäße Vorrichtung zeichnet sich zudem durch einen wartungsarmen Betrieb aus.

Eine Drehung des Moduls allein um die Vertikale oder allein um die Horizontalen ist nicht möglich, so dass die erzielte Nachführung des Moduls zu manchen Zeiten in geringem Maße von der optimalen Nachführung des Moduls abweichen kann. Jedoch verursachen diese eventuell auftretenden geringen Abweichungen lediglich eine geringfügig niedrigere Effizienzsteigerung im Vergleich zu optimal nachgeführte Modulen, die in wirtschaftlicher Sicht durch die einfache und wartungsarme Konstruktion mehr als kompensiert wird.

Die quadratische Ausbildung des Moduls und der Trageinrichtung bietet sich an, auch wenn die einzelnen Modulelemente typischer Weise rechteckig ausgebildet sind, so dass zur Bildung eines (zusammengesetzten) quadratischen Moduls auf herkömmliche Modulelemente zurückgegriffen werden kann. Die zu einer Diagonalen des Quadrats parallel verlaufenden beziehungsweise mit dieser zusammenfallenden Achse ist nämlich deshalb von Vorteil, da derart zum Einen eine besonders stabile Konstruktion erzielt wird. Die Vorrichtung ist somit äußerst unempfindlich gegen äußere Einflüsse, wie zum Beispiel Windbelastungen, die an den üblichen Aufstellungsorten für nachgeführte Solaranlagen durchaus beachtlich sein können. Die Wellenzapfen der Achse können sich an den Ecken des Quadrats befinden und besitzen somit einen großen Abstand voneinander, wodurch die Momentenbelastung der Vorrichtung reduziert wird.

Die Ausbildung des Moduls als Quadrat, wobei die Achse parallel zu einer Diagonalen des Quadrats verläuft oder mit dieser zusammenfällt, ist darüber hinaus auch für die Platzverhältnisse der Vorrichtung sehr von Vorteil. Sowohl der höchste als auch der tiefste Punkt des Moduls wird durch jeweils eine Ecke des Moduls gebildet. Bei einer Drehung des Moduls nach Westen oder nach Osten gelangt das Modul in eine Position, in der eine seiner Seitenlinien parallel zu dem Untergrund verläuft. Aus diesem Grund ist - im Gegensatz zu Modulen rechteckigen Querschnitts - die Aufstellung der Vorrichtung fast ohne Abstand zu dem Untergrund möglich. Hierdurch wirken zum einen geringere Kräfte und Momente, insbesondere Windlasten, auf die Konstruktion und zum anderen kann letztgenannte - weil weniger hoch aufragend - weniger aufwändig und somit kostengünstiger aufgebaut sein. Dies gilt wegen der reduzierten Belastungen auch für die Unterkonstruktion, zum Beispiel in Form von Fundamenten.

Bei einer vorteilhaften Ausgestaltung der vorliegenden Erfindung weist der Winkel α einen Wert zwischen 20° und 60°, vorzugsweise zwischen 30° und 50°, auf.

Wie eingangs erwähnt, hängt die Ausrichtung der Vorrichtung von der geographischen Breite des Aufstellungsortes ab. Durch Variation des Winkels α kann dieser Tatsache Rechnung getragen werden. Beispielsweise liegt der für eine im Jahresmittel optimierte Energieausbeute vorzusehende Winkel α in Deutschland zwischen 40° und 45°.

Eine vorteilhafte Ausführungsform der erfindungsgemäßen Vorrichtung sieht vor, dass das Mittel zur Nachführung der Trageinrichtung eine Seilwinde ist, wobei das Seil an den frei beweglichen Ecken der Trageinrichtung angreift. Hierdurch wird eine technisch einfache und dennoch effektive und stabile Art der Nachführung erreicht. Zum Einen können zwei auf einer Diagonalen liegende Ecken durch die hierzu parallele Ausbildung der Achse gehalten werden, wobei zum Anderen die verbleibenden beiden Ecken durch die angreifenden Seile der Seilwinde stabilisiert werden. Durch die Führung des Seils über Umlenkpunkte kann eine konstante Seillänge bzw. Vorspannung für die Seilführung erreicht werden. Somit kann ein Modul mit oftmals großen Abmessungen äußerst stabil und unempfindlich gegen Windbelastungen nachgeführt und gesichert werden.

Zur Automatisierung der Nachführung des Moduls kann eine kontinuierliche oder schrittweise Zeitsteuerung vorgesehen werden, die an die zyklische Bewegung der Sonne angepasst ist.

Verfahrensmäßig wird die Aufgabe dadurch gelöst, dass die Trageinrichtung in dem Gestell genau an zwei Punkten befestigt wird, so dass die Drehbewegung zur Nachführung des Moduls um genau die durch diese Punkte definierte Achse erfolgt, die parallel zu einer Diagonalen des von dem Modul gebildeten Quadrats verläuft oder mit dieser zusammenfällt.

Dabei ist es vorteilhaft, wenn die Nachführung des Moduls kontinuierlich oder schrittweise zeitgesteuert mittels einer Seilwinde erfolgt.

Weitere vorteilhafte Antriebe zur Nachführung sind ein an die Achse angeflanschter Schrittmotor oder eine am Tragrahmen angreifende Positionierstange (mechanisch, pneumatisch oder hydraulisch betätigt).

Schließlich wird die Aufgabe durch eine Anordnung von mehreren Solarmodulen entlang einer durch den Aufstellungsort definierten Meridianebene gelöst, wobei die Module jeweils mit einer um eine Achse drehbar gelagerten Trageinrichtung, einem die Trageinrichtung haltenden, ortsfest zu installierenden Gestell und Mitteln zur Nachführung der Trageinrichtungen zusammen mit den Modulen ausgestattet sind, wobei die jeweiligen Achsen parallel zu einer durch das zugehörige Modul definierten Ebene sowie in einer durch den Aufstellungsort definierten gemeinsamen Meridianebene unter einem Winkel α zwischen 10° und 70° zur Horizontalen des Aufstellungsortes verlaufen und die Module sowie die Trageinrichtungen ungefähr quadratisch ausgebildet sind, wobei die Befestigung der jeweiligen Trageinrichtungen in dem Gestell genau an zwei Punkten erfolgt, so dass die Drehbewegung um genau die durch diese Punkte definierten Achsen möglich ist, die jeweils parallel zu einer Diagonalen des jeweiligen Quadrats verlaufen oder mit dieser zusammenfallen. Hierdurch werden die vorrichtungsmäßigen Vorteile analog erreicht.

Bei einer Ausgestaltung der Anordnung verlaufen die Achsen aller Module unter demselben Winkel α zur Horizontalen.

Besonders vorteilhaft ist es, wenn die Module über ein gemeinsam wirkendes Mittel zur Nachführung verfügen.

### Ausführungsbeispiel

Die Erfindung wird nachfolgend anhand mehrerer Ausführungsbeispiele für eine erfindungsgemäße Vorrichtung zur Nachführung von Sonnenkollektoren sowie für eine Anordnung einer Mehrzahl von Modulen, die jeweils in den Zeichnungen dargestellt sind, näher erläutert.

Es zeigt:
- Figur 1:: ein erstes Beispiel für eine erfindungsgemäße Lage der Drehachse in Bezug auf die Modulfläche,
- Figur 2:: eine Draufsicht auf eine erfindungsgemäße Trageinrichtung,
- Figur 3:: eine Seitenansicht einer erfindungsgemäßen Vorrichtung,
- Figur 3a:: eine Seitenansicht einer alternativen Vorrichtung,
- Figur 3b:: eine Seitenansicht einer weiteren alternativen Vorrichtung,
- Figur 4:: eine perspektivische Darstellung der Vorrichtung gemäß Figur 3 und
- Figur 5:: eine schematische Darstellung einer Anordnung einer Mehrzahl von feldartig aufgestellten Modulen.

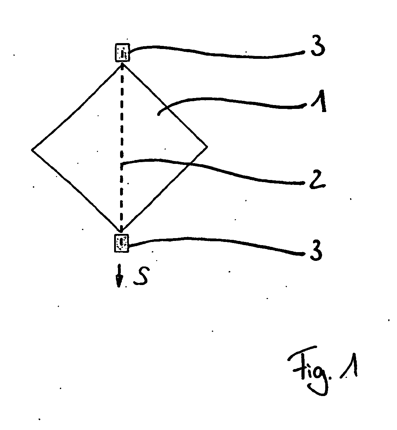

In der Figur 1 ist ein Modul 1 in vereinfachter Darstellung gezeigt, das eine quadratische Grundfläche aufweist. Diese Grundfläche kann entweder durch die Formgebung allein eines Moduls 1 erreicht werden, oder aber auch durch das Zusammensetzten mehrerer Modulelemente aneinander, die für sich jeweils auch eine Rechteckform aufweisen können. Aufgrund der meist vorgegebenen Abmessungen der vorgefertigten einzelnen Modulelemente kann es gegebenenfalls vorkommen, dass die Elemente derart zusammengefügt werden, dass eine geringe Fläche, zum Beispiel in der Mitte, des Gesamtmoduls beziehungsweise des Tragrahmens frei bleibt.

Ferner ist in der Figur 1 eine Achse 2 dargestellt, bei der es sich um die Drehachse des Moduls 1 in einer lediglich durch Lager 3 repräsentierten und ansonsten nicht dargestellten Trageinrichtung 4 handelt. Die Achse 2, um die eine Nachführung erfolgt, fällt in der Draufsicht mit einer Diagonalen des Moduls 1 zusammen.

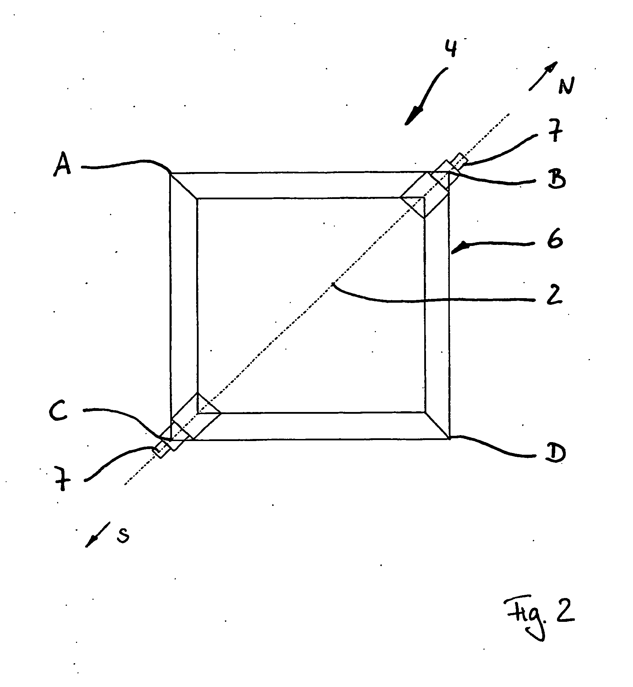

Die Figur 2 zeigt eine Draufsicht auf eine erfindungsgemäße Trageinrichtung 4 einer Vorrichtung 5 zur Nachführung, die in Form eines quadratischen Rahmens 6 ausgebildet ist, der aus herkömmlichen Profilen aus Metall oder Holz, insbesondere Stahl oder Aluminium, zusammengesetzt ist. Die Achse 2, um die die Trageinrichtung 4 und das darauf oder darin zu montierende Modul 1 (hier nicht dargestellt) oder eine aus Modulen 1 zusammengesetzte Modulanordnung gedreht wird, fällt in der Figur 2 mit einer der Diagonalen des Rahmens 6 zusammen. Die Ecken B und C des Rahmens 6 sind mit Zapfen 7 ausgestattet, deren Mittellinien die Achse 2 definieren, wobei die Zapfen 7 fest mit den Profilen des Rahmens 6 verbunden sind. Während die Ecken A und B frei auf einem Umkreis um die Achse 2 beweglich sind, haben die Ecken B und C bei entsprechender Lagerung der Trageinrichtung 4 eine fixe Position.

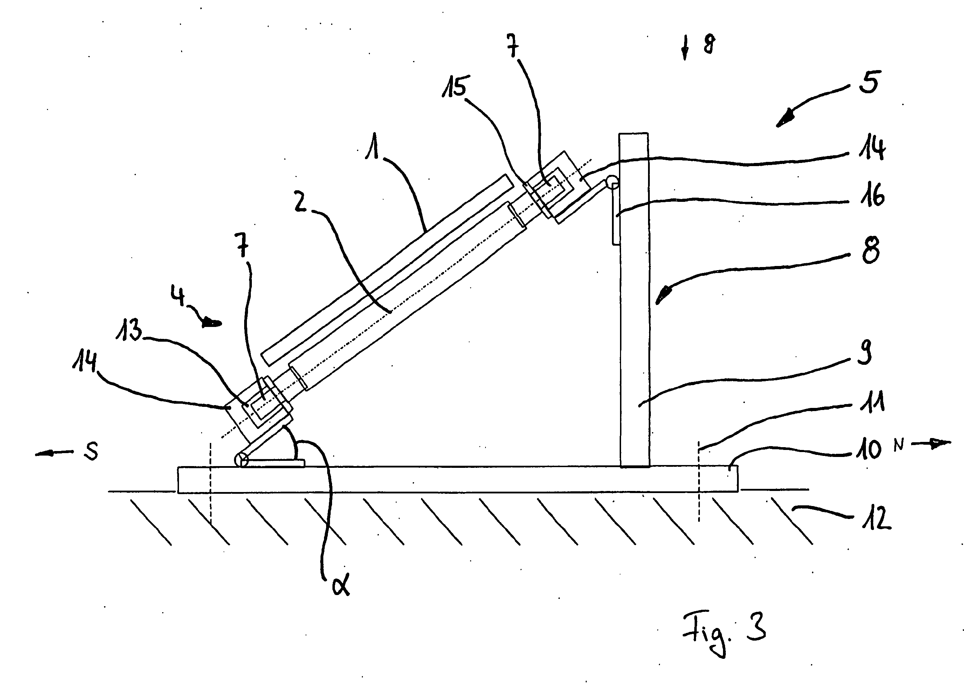

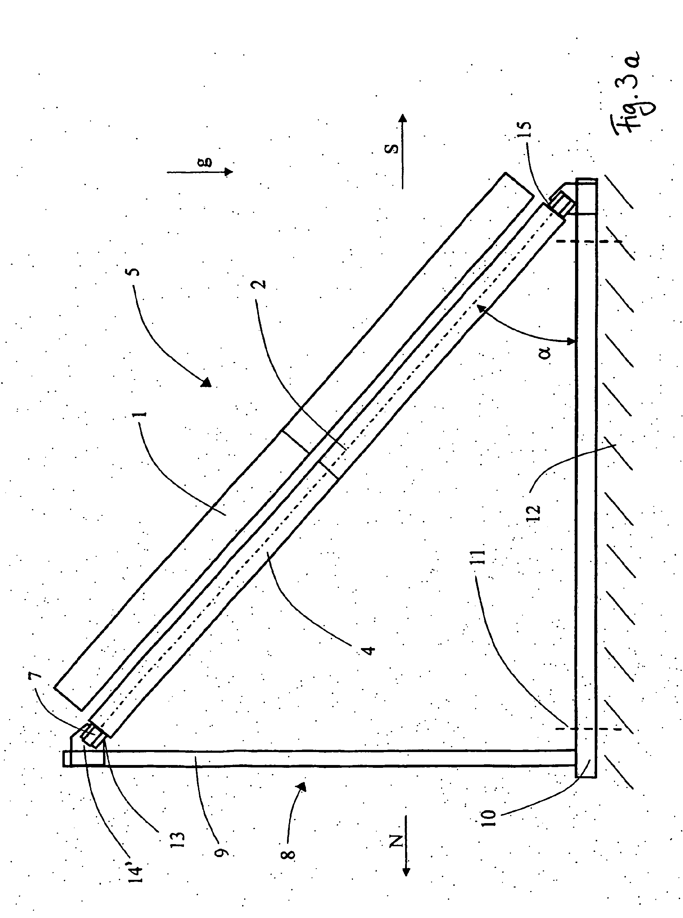

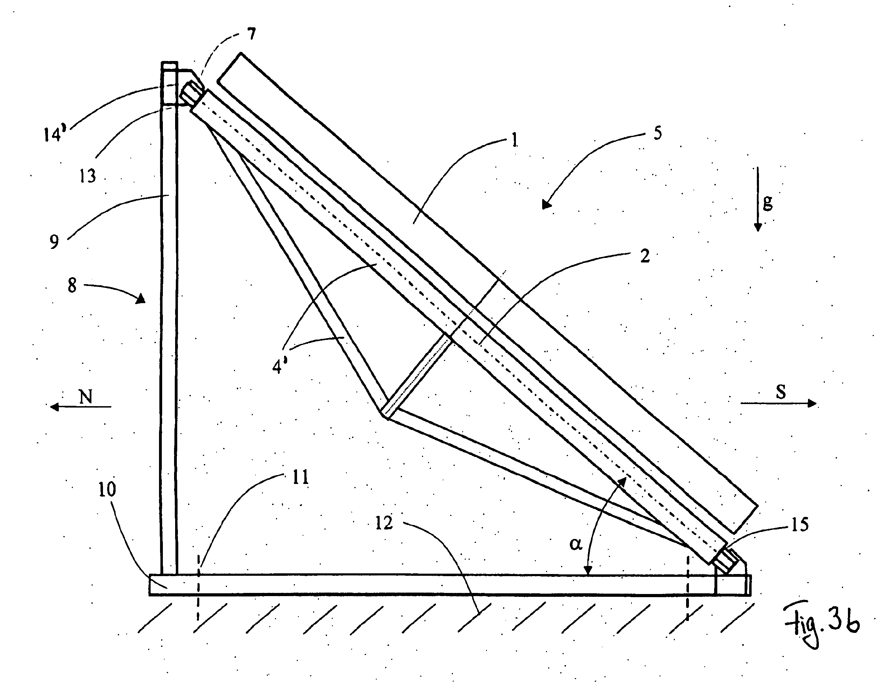

In der Figur 3 ist erkennbar, wie die Trageinrichtung 4 mit einem mit nicht dargestellten Mitteln auf dieser angebrachten Modul 1 in einem Gestell 8 gelagert ist. Das Gestell 8 selbst besteht aus einer Seitenwand 9 und einer Grundplatte 10, die mit herkömmlichen und nicht dargestellten Mitteln zu einem rechten Winkel zusammengefügt sind. Die Grundplatte 10 ist mit Verbindungsmitteln 11 auf einem Untergrund 12 befestigt. Anstelle von wand- oder plattenförmigen Bauteilen können auch Rahmenkonstruktionen für das Gestell 8 verwendet werden.

Die Trageinrichtung 4 liegt mit ihren beiden die Achse 2 festlegenden Zapfen 7 jeweils in einer Bronzebuchse 13, die wiederum in ein Lager 14 eingebettet ist. Die Buchse 13 ist mit einem Buchsenbund 15 versehen. Die Lager 14 der Trageinrichtung 4 sind mittels Scharnieren 16 sowohl an der Seitenwand 9, als auch an der Grundplatte 10 mit dem Gestell 8 verbunden und schließen einen Neigungswinkel α mit der Horizontalen von etwa 35° ein. Dies entspricht ebenfalls der Neigung der Achse 2, um die die Trageinrichtung 4 mit dem daran angebrachten Modul 1 nachgeführt wird.

In den Figuren 3a und 3b sind jeweils alternative Ausführungen der erfindungsgemäßen Vorrichtung 5 gezeigt, die im großen und ganzen mit der Ausbildung gemäß Figur 3 übereinstimmen. Anstelle der in der Figur 3 dargestellten Scharniere 16 weisen die Vorrichtungen gemäß den Figuren 3a und 3b lediglich Lager 14' auf, die unmittelbar mit der Grundplatte 10 und der Seitenwand 9 verbunden sind. Die Seitenwand 9 kann alternativ als Mast ausgebildet sein.

Die Trageinrichtung 4' gemäß Figur 3b weist an ihrer dem Modul 1 abgewandten Seite eine Verstrebung zur Stabilisierung auf.

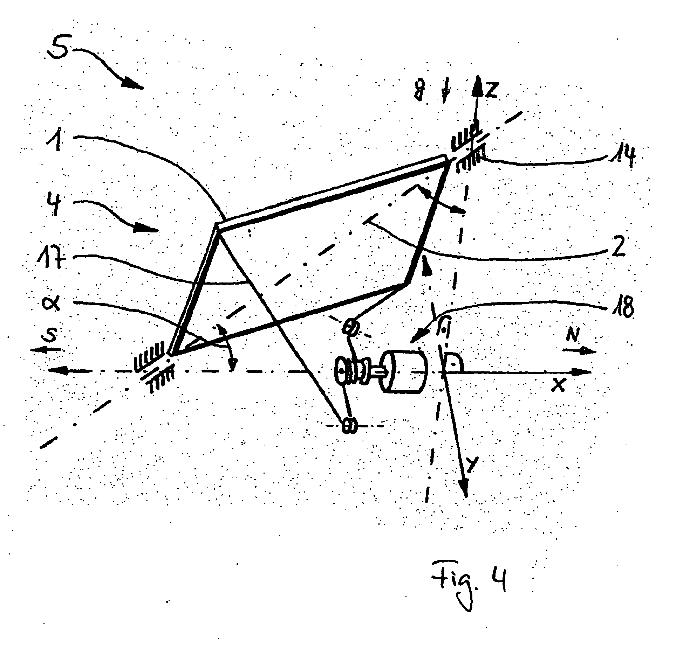

Schließlich zeigt Figur 4 eine perspektivische Darstellung der erfindungsgemäßen Vorrichtung 5 mit Modulausrichtung nach Westen, wobei das Gestell 8 nicht explizit gezeigt ist, sondern lediglich durch Achsen angedeutet wird. Die Lager 14 der rechteckig ausgebildeten und das Modul 1 tragenden Trageinrichtung 4 sind ebenfalls nur schematisch angedeutet und nicht im Detail gezeigt. Die durch die Lager 14 verlaufende Achse 2 entspricht der Achse 2, um die die Trageinrichtung 4 in dem Gestell 8 nachgeführt wird. Hierzu greift ein Seil 17 einer Seilwinde 18 in einem Abstand von der Achse 2 an den Ecken A und D der Trageinrichtung 4 an. Durch die Umlenkung des Seils 17 an zwei Umlenkpunkten wird eine konstante Seillänge beziehungsweise eine Vorspannung für die Seilführung erreicht. Da die Achse 2 in einem Winkel α gegenüber der Horizontalen geneigt ist, ruft eine Drehung der Trageinrichtung 4 um die Achse 2 eine Nachführung des auf der Trageinrichtung 4 befindlichen Moduls 1 gleichzeitig um die Horizontale und die Vertikale hervor.

Die Vorrichtung wird vorzugsweise so aufgestellt, dass die Achse 2 der Trageinrichtung in einer in Nord-Süd-Richtung verlaufenden vertikalen Ebene liegt. Der Winkel α entspricht dann dem minimalen Anstellwinkel (Mittags wirksam). Bei Ausrichtung nach Osten oder Westen steigt gleichzeitig der Anstellwinkel kontinuierlich an. Die in der Figur 4 benannten Himmelsrichtungen gelten für den Einsatz auf der Nordhalbkugel.

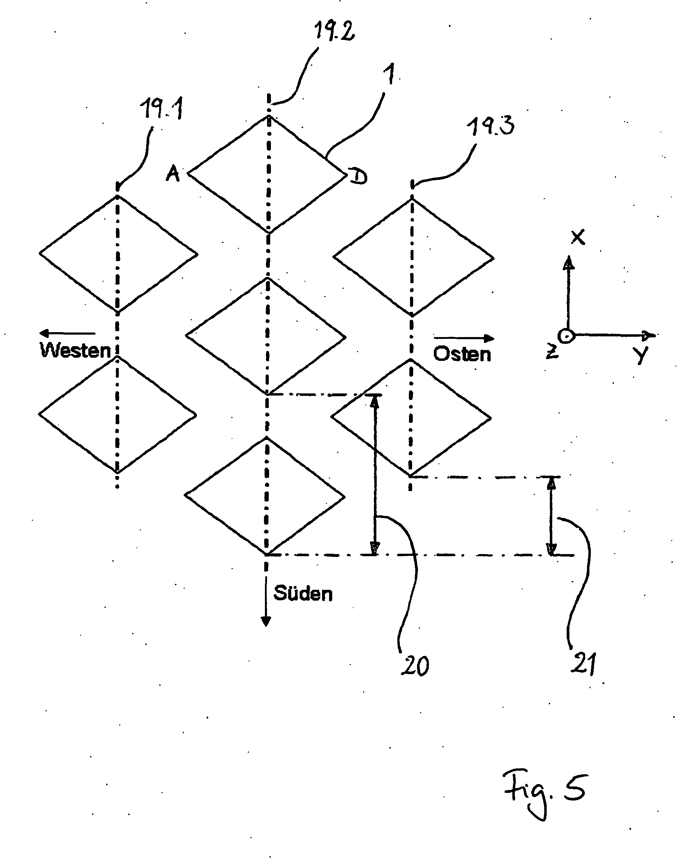

Fig. 5 zeigt in schematischer Darstellung eine Anordnung einer Mehrzahl von Modulen 1, mit denen z.B. eine Dach- oder Freifläche bestückt werden kann. Die Module 1 sind beispielsweise in drei parallel zueinander verlaufenden Reihen 19.1, 19.2, 19.3 angeordnet. Bei der Darstellung nach Fig. 5 handelt es sich um eine Draufsicht in senkrechter Richtung auf die Erdoberfläche, d.h. mit Blickrichtung auf den Erdmittelpunkt. Die Reihen 19.1, 19.2, 19.3 verlaufen horizontal, d.h. liegen in einer gemeinsamen Horizontalebene (X,Y-Ebene). Im Falle einer räumlich sehr großen Ausdehnung einer derartigen Anordnung befinden sich die Reihen 19.1, 19.2, 19.3 theoretisch nicht in einer gemeinsamen Ebene, sondern es handelt sich dann um die jeweiligen Meridian-Linien.

Im Rahmen der hier sinnvollen Messgenauigkeit kann jedoch von einer Parallelität der Reihen 19.1., 19.2 und 19.3 innerhalb einer Horizontalebene, d.h. Tangentialebene am betreffenden Aufstellort (z.B. Mitte des Feldes), ausgegangen werden.

Aufgrund des in der Draufsicht nicht sichtbaren Anstellwinkels der Module 1 gegenüber der horizontal verlaufenden X-Achse erscheinen die quadratischen Module 1 bzw. die darunter angeordnete gleichfalls quadratische und mit dem Modul 1 deckungsgleiche Trageinrichtung als Rauten, d.h. ihre Ausdehnung in X-Richtung ist kleiner als ihre Ausdehnung als in Y-Richtung, wobei das letztgenannte diagonal gemessene Breitenmaß unverfälscht dargestellt ist. Wie in den Figuren 3 und 4 dargestellt, sind die Oberflächen der Module 1 nach Süden hin angestellt, da es sich bei der in Fig. 5 gezeigten Anordnung um eine Aufstellung auf der Nordhalbkugel handeln soll.

Fig. 5 zeigt die Stellung der Module 1, in der diese exakt nach Süden ausgerichtet sind, d.h. die Stellung zur Mittagszeit eingenommen wird.

Der Abstand 20 benachbarter Module jeweils in derselben Reihe 19.1, 19.2, 19.3 ist stets gleich und so bemessen, dass in der Mittagszeit - möglichst auch im Winterhalbjahr - keine Verschattung der in derselben Reihe 19.1, 19.2, 19.3 hintereinander angeordneten Module 1 eintritt. In benachbarten Reihen 19.1, 19.2; 19.2, 19.3 sind die Module 1 jeweils mit einem Versatz 21 zueinander angeordnet, der eine Verschattung von Modulen 1 in benachbarten Reihen auch in den Morgen- und Abendstunden verhindern soll, wenn die Sonne also aus östlicher oder westlicher Richtung entsprechend flacher einstrahlt. Durch eine solchermaßen versetzte Anordnung kann die sich zwischen zwei Modulen 1 in derselben Reihe 19.1, 19.2, 19.3 aufgrund der "Diagonallagerung" der Module ergebende Lücke von einem jeweils entsprechend positionierten Modul 1 in der benachbarten Reihe 19.1, 19.2, 19.3 ausgefüllt und energetisch genutzt werden. Es versteht sich, dass durch eine Veränderung des Abstandes zwischen den Reihen 19.1, 19.2, 19.3 einerseits und des Abstandes 20 zwischen benachbarten Modulen 1 innerhalb derselben Reihe 19.1, 19.2, 19.3 andererseits eine in Bezug auf die Energieausbeute optimale Ausnutzung der belegten Oberfläche erreicht werden kann. Insbesondere ist dabei der vergrößerte Schattenwurf in den Morgen- und Abendstunden gegenüber der Mittagszeit zu beachten, wodurch sich ein entsprechend größerer Abstand zwischen benachbarten Modulen in Ost-West-Richtung gegenüber der Nord-Süd-Richtung ergibt.

Im Hinblick auf eine kostengünstige Herstellung der in Fig. 5 gezeigten Modulanordnung ist es von Vorteil, wenn für sämtliche Module 1 der Anordnung - zumindest jedoch für die Module jeweils einer Reihe 19.1, 19.2, 19.3 - eine einzige Nachführungsvorrichtung verwendet wird. So können beispielsweise die Ecken A aller Module 1 einer Reihe 19.1, 19.2, 19.3 mittels eines einzigen Seils oder einer einzigen gelenkig an den Ecken A angebundenen Verbindungsstange (oder einer Mehrzahl derer) miteinander gekoppelt werden. An den jeweiligen Enden der Reihen 19.1, 19.2, 19.3 befindet sich in diesen Fällen eine Antriebsmechanik, die sowohl eine Bewegung des gemeinsamen Koppelgliedes in X-Richtung als auch in Y-Richtung realisiert. Es versteht sich, dass die Anzahl der Module 1 innerhalb einer Reihe 19.1, 19.2, 19.3 ebenso wenig begrenzt ist, wie die Anzahl parallel zueinander angeordneter Reihen 19.1, 19.2, 19.3.

### Bezugszeichenliste

- 1: Modul
- 2: Achse
- 3: Lager
- 4: Trageinrichtung
- 4': Trageinrichtung
- 5: Vorrichtung
- 6: Rahmen
- 7: Zapfen
- 8: Gestell
- 9: Seitenwand
- 10: Grundplatte
- 11: Verbindungsmittel
- 12: Untergrund
- 13: Bronzebuchse
- 14: Lager
- 14': Lager
- 15: Buchsenbund
- 16: Scharnier
- 17: Seil
- 18: Seilwinde
- 19.1, 19.2, 19.3: Reihe
- 20: Abstand
- 21: Versatz
- A, B: Ecke
- C, D: Ecke
- g.: Erdbeschleunigung
S = Süd
N= Nord
W= West
O= Ost
- α: Winkel

## Patentansprüche

1. Vorrichtung (5) zur Nachführung mindestens eines Moduls (1) einer Solarmodulanlage, umfassend eine das Modul (1) tragende und um eine Achse (2) drehbar gelagerte Trageinrichtung (4), ein die Trageinrichtung (4) haltendes, ortsfest zu installierendes Gestell (8) sowie Mittel zur Nachführung der Trageinrichtung (4) zusammen mit dem Modul (1), wobei die Achse (2) parallel zu einer durch das Modul (1) definierten Ebene und in einer durch den Aufstellungsort definierten Meridianebene unter einem Winkel (α) zwischen 10° und 70° zur Horizontalen des Aufstellungsortes verläuft und das Modul (1) sowie die Trageinrichtung (4) ungefähr quadratisch ausgebildet sind, **dadurch gekennzeichnet, dass** die Befestigung der Trageinrichtung (4) in dem Gestell (8) genau an zwei Punkten (B, C) erfolgt, so dass die Drehbewegung um genau die durch diese Punkte (B, C) definierte Achse (2) möglich ist, die parallel zu einer Diagonalen des Quadrats verläuft oder mit dieser zusammenfällt.

2. Vorrichtung (5) nach Anspruch 1, **dadurch gekennzeichnet, dass** der Winkel (α) einen Wert zwischen 20° und 60°, vorzugsweise zwischen 30°und 50°, aufweist.

3. Vorrichtung (5) nach einem der vorangegangenen Ansprüche, **dadurch gekennzeichnet, dass** das Mittel zur Nachführung der Trageinrichtung (4) eine Seilwinde (18) ist, wobei das Seil (17) an den frei beweglichen Ecken (A, D) der Trageinrichtung (4) angreift.

4. Vorrichtung (5) nach einem der vorangegangenen Ansprüche, **dadurch gekennzeichnet, dass** sie mit einer kontinuierlichen oder schrittweisen Zeitsteuerung zur Nachführung des Moduls (1) ausgestattet ist.

5. Verfahren zur Nachführung mindestens eines ungefähr quadratisch ausgebildeten Moduls (1) einer Solarmodulanlage, wobei die Nachführung des Moduls (1) durch Drehung um eine parallel zu der Modulfläche liegenden Achse (2) erfolgt, wobei die Achse (2) in einer durch den Aufstellungsort definierten Meridianebene unter einem Winkel (α) zwischen 10° und 70° zur Horizontalen des Aufstellungsortes verläuft, **dadurch gekennzeichnet, dass** die Trageinrichtung (4) in dem Gestell (8) genau an zwei Punkten (B, C) befestigt wird, so dass die Drehbewegung um genau die durch diese Punkte (B, C) definierte Achse (2) erfolgt, die parallel zu einer Diagonalen des von dem Modul (1) gebildeten Quadrats verläuft oder mit dieser zusammenfällt.

6. Verfahren nach Anspruch 5, **dadurch gekennzeichnet, dass** die Nachführung des Moduls (1) mittels einer Seilwinde (18) erfolgt.

7. Verfahren nach Anspruch 5 oder 6, **dadurch gekennzeichnet, dass** die Nachführung mit Hilfe einer kontinuierlichen oder schrittweisen Zeitsteuerung erfolgt.

8. Anordnung von Solarmodulen entlang einer durch den Aufstellungsort definierten Meridianebene, wobei die Module (1) jeweils mit einer um eine Achse (2) drehbar gelagerten Trageinrichtung (4), einem die Trageinrichtung (4) haltenden, ortsfest zu installierenden Gestell (8) und Mitteln zur Nachführung der Trageinrichtungen (4) zusammen mit den Modulen (1) ausgestattet sind, wobei die jeweiligen Achsen (2) parallel zu einer durch das zugehörige Modul (1) definierten Ebene sowie in einer durch den Aufstellungsort definierten gemeinsamen Meridianebene unter einem Winkel (α) zwischen 10° und 70° zur Horizontalen des Aufstellungsortes verlaufen und die Module (1) sowie die Trageinrichtungen (4) ungefähr quadratisch ausgebildet sind, **dadurch gekennzeichnet, dass** die Befestigung der jeweiligen Trageinrichtungen (4) in dem Gestell (8) genau an zwei Punkten (B, C) erfolgt, so dass die Drehbewegung um genau die durch diese Punkte (B, C) definierten Achsen (2) möglich ist, die jeweils parallel zu einer Diagonalen des jeweiligen Quadrats verlaufen oder mit dieser zusammenfallen.

9. Anordnung nach Anspruch 8, **dadurch gekennzeichnet, dass** die Achsen (2) aller Module (1) der Anordnung unter demselben Winkel (α) zur Horizontalen verlaufen.

10. Anordnung nach Anspruch 8 oder 9, **dadurch gekennzeichnet, dass** die Module (1) über ein gemeinsam wirkendes Mittel zur Nachführung verfügen.

11. Anordnung nach einem der Ansprüche 8 bis 10, **dadurch gekennzeichnet, dass** die Module (1) jeweils im Abstand zueinander entlang von parallel zueinander und parallel zu der durch in Aufstellungsort definierten Meridianebene eines Moduls (1) verlaufenden Reihen (19.1, 19.2, 19.3) angeordnet sind, wobei die Module (1) benachbarter Reihen (19.1, 19.2; 19.2, 19.3) mit einem Versatz (21) in Richtung der Reihen (19.1, 19.2, 19.3) angeordnet sind.

## Claims

1. A device (5) for the tracking of at least one module (1) of a modular solar system comprising a carrying device (4) rotationally mounted about an axis (2) carrying the module (1), a frame (8) holding the carrying device (4) and to be installed in a fixed manner as well as means for the tracking of the carrying device (4) together with the module (1), wherein the axis (2) runs parallel to a plane defined by the module (1) and in a meridian plane defined by the installation location at an angle (α) between 10º and 70º to the horizontal of the installation location and the module (1) as well as the carrying device (4) are configured approximately square, **characterized in that** the fastening of the carrying device (4) in the frame (8) is effected exactly at two points (B, C), so that the rotational movement about the axis (2) exactly defined by these points (B, C) is possible, which runs parallel to a diagonal of the square or coincides with the latter.

2. The device (5) according to Claim 1, **characterized in that** the angle (α) has a value between 20º and 60º, preferentially between 30º and 50º.

3. The device (5) according to any one of the preceding claims, **characterized in that** the means for tracking the carrying device (4) is a cable winch (18), wherein the cable (17) acts on the freely moveable corners (A, B) of the carrying device (4).

4. The device (5) according to any one of the preceding claims, **characterized in that** it is equipped with a continuous or step-by-step time control for the tracking of the module (1).

5. A method for the tracking of at least one module (1) of a modular solar system configured approximately square, wherein the tracking of the module (1) is effected through rotation about an axis (2) located parallel to the module surface, wherein the axis (2) runs in a meridian plane defined by the installation location at an angle (α) between 10º and 70º to the horizontal of the installation location, **characterized in that** the carrying device (4) is fastened in the frame (8) exactly at two points (B, C) so that the rotary movement takes place about the axis (2) exactly defined by these points (B, C), which runs parallel to or coincides with a diagonal of the square formed by the module (1).

6. The method according to Claim 5, **characterized in that** the tracking of the module (1) is effected by means of a cable winch (18).

7. The method according to Claim 5 or 6, **characterized in that** the tracking is effected with the help of a continuous or step-by-step time control.

8. An arrangement of solar modules along a meridian plane defined by the installation location, wherein the modules (1) are each equipped with a carrying device (4) rotatably mounted about an axis (2), a frame (8) holding the carrying device (4) and to be installed in a fixed manner and means for the tracking of the carrying device (4) together with the modules (1), wherein the respective axes (2) run parallel to a plane defined by the respective module (1) and in a common meridian plane defined by the installation location at an angle (α) between 10º and 70º to the horizontal of the installation location and the modules (1) as well as the carrying devices (4) are configured approximately square, **characterized in that** the fastening of the respective carrying devices (4) in the frame (8) is effected exactly at two points (B, C) so that the rotary movement about the axes (2) exactly defined through these points (B, C) is possible, each of which runs parallel to or coincided with a diagonal of the respective square.

9. The arrangement according to Claim 8, **characterized in that** the axes (2) of all modules (1) of the arrangement run at the same angle (α) to the horizontal.

10. The arrangement according to Claim 8 or 9, **characterized in that** the modules (1) have a jointly acting means for tracking.

11. The arrangement according to any one of the Claims 8 to 10, **characterized in that** the modules (1) are each arranged spaced from each other along rows (19.1, 19.2, 19.3) running parallel to each other and parallel to the meridian plane of a module (1) defined by the installation location, wherein the modules (1) of neighbouring rows (19.1, 19.2; 19.2, 19.3) are arranged with an offset (21) in the direction of the rows (19.1, 19.2, 19.3).

## Revendications

1. Dispositif (5) pour l'asservissement d'au moins un module (1) d'une installation de module solaire, comprenant un dispositif support (4) portant le module (1) et logé de façon rotative autour d'un axe (2), un bâti (8) maintenant le dispositif support (4) à installer de façon fixe ainsi que des moyens pour l'asservissement du dispositif support (4) en même temps que le module (1), l'axe (2) étant agencé parallèlement à un plan défini par le module (1) et dans un plan méridien défini par le lieu d'implantation sous un angle (α) compris entre 10° et 70° par rapport à l'horizontale du lieu d'implantation et le module (1) ainsi que le dispositif support (4) étant conçus approximativement carrés, **caractérisé en ce que** la fixation du dispositif support (4) dans le bâti (8) s'effectue exactement en deux points (B, C) de sorte que le mouvement de rotation est possible autour de précisément l'axe (2) défini par ces points (B, C), qui est agencé parallèlement à une diagonale du carré ou coïncide avec celle-ci.

2. Dispositif (5) selon la revendication 1, **caractérisé en ce que** l'angle (α) présente une valeur comprise entre 20° et 60°, de préférence entre 30° et 50°.

3. Dispositif (5) selon l'une quelconque des revendications précédentes, **caractérisé en ce que** le moyen pour l'asservissement du dispositif support (4) présente un treuil de câble (18), le câble (17) s'appliquant sur les coins (A, D) mobiles du dispositif support (4).

4. Dispositif (5) selon l'une quelconque des revendications précédentes, **caractérisé en ce qu'**il est équipé d'une commande de temps continue ou progressive pour l'asservissement du module (1).

5. Procédé pour l'asservissement d'au moins un module (1) conçu approximativement carré d'une installation de module solaire, l'asservissement du module (1) s'effectuant par rotation autour d'un axe (2) posé parallèlement à la surface du module, l'axe (2) étant agencé dans un plan méridien défini par le lieu d'implantation sous un angle (α) compris entre 10° et 70° par rapport à l'horizontale du lieu d'implantation, **caractérisé en ce que** le dispositif support (4) est fixé dans le bâti (8) précisément en deux points (B, C), de sorte que le mouvement de rotation s'effectue autour de exactement l'axe (2) défini par ces points (B, C), lequel est agencé parallèlement à une diagonale du carré formé par le module (1) ou coïncide avec celle-ci.

6. Procédé selon la revendication 5, **caractérisé en ce que** l'asservissement du module (1) s'effectue au moyen d'un treuil de câble (18).

7. Procédé selon la revendication 5 ou 6, **caractérisé en ce que** l'asservissement s'effectue à l'aide d'une commande de temps continue ou progressive.

8. Agencement de module solaire le long d'un plan méridien défini par le lieu d'implantation, les modules (1) étant équipés chacun d'un dispositif support (4) logé de façon rotative autour d'un axe (2), d'un bâti (8) maintenant le dispositif support (4) et à installer de façon fixe et de moyens pour l'asservissement des dispositifs supports (4) en même temps que les modules (1), les axes (2) respectifs étant agencés parallèlement à un plan défini par le module (1) spécifique et dans un plan méridien commun défini par le lieu d'implantation sous un angle (α) compris entre 10° et 70° par rapport à l'horizontale du lieu d'implantation et les modules (1) ainsi que les dispositifs supports (4) étant conçus approximativement carrés, **caractérisé en ce que** la fixation des dispositifs supports (4) respectifs dans le bâti (8) s'effectue exactement en deux points (B, C), de sorte que le mouvement de rotation autour de précisément les axes (2) définis par ces points (B, C) est possible, lesquels axes sont agencés chacun parallèlement à une diagonale du carré respectif ou coïncident avec celle-ci.

9. Agencement selon la revendication 8, **caractérisé en ce que** les axes (2) de tous les modules (1) de l'agencement sont disposés sous le même angle (α) par rapport à l'horizontale.

10. Agencement selon la revendication 8 ou 9, **caractérisé en ce que** les modules (1) disposent d'un moyen agissant conjointement pour l'asservissement.

11. Agencement selon l'une quelconque des revendications 8 à 10, **caractérisé en ce que** les modules (1) sont disposés à chaque fois à distance les uns des autres le long de rangées (19.1, 19.2, 19.3) agencées parallèlement entre elles et parallèlement au plan méridien défini au lieu d'implantation d'un module (1), les modules (1) de rangées (19.1, 19.2 ; 19.2, 19.3) voisines étant disposés avec un déport (21) en direction des rangées (19.1, 19.2, 19.3).
